# EUROPEAN PATENT SPECIFICATION

(11) **EP 2 683 542 B1**
(45) Date of publication and mention of the grant of the patent: **06.05.2015**
(21) Application number: 12709159.3
(22) Date of filing: 08.03.2012
(51) Int. Cl.: B29B 9/12, B82Y 40/00, B29C 70/12, B29C 70/28, B82Y 30/00

(54) **METHOD OF MANUFACTURING A COMPOSITE MATERIAL AND COMPOSITE MATERIAL**
VERFAHREN ZUR HERSTELLUNG EINES VERBUNDWERKSTOFFS UND VERBUNDWERKSTOFF
PROCÉDÉ DE FABRICATION D'UNE MATIÈRE COMPOSITE ET MATIÈRE COMPOSITE

(30) Priority: 11.03.2011 GB 201104130
(43) Date of publication of application: 15.01.2014
(73) Proprietor: AirbusGroup Limited, London WC2R 0AP (GB)
(72) Inventor: FARMER, Benjamin Lionel, Totterdown Bristol BS4 3DF (GB)
(74) Representative: Ribeiro, James Michael
(86) International application number: PCT/GB2012/050512
(87) International publication number: WO 2012/123716

(56) References cited:
- WO-A1-2008/029178
- WO-A1-2009/019510
- DE VOLDER, MICHAEL; TAWFICK, SAMEH H.; PARK, SEI JIN; COPIC, DAVOR; ZHAO, ZHOUZHOU; LU, WEI; HART, A. JOHN: "Diverse 3D Microarchitectures Made by Capillary Forming of Carbon Nanotubes", ADVANCED MATERIALS, vol. 22, 2010, pages 4384-4389, XP002677123, DOI: 10.1002/adma.201001893 cited in the application

## Description

### FIELD OF THE INVENTION

The present invention relates to a method for manufacturing a composite material, and a composite material.

### BACKGROUND OF THE INVENTION

A method of manufacturing a composite material is described in WO 2008/029178. Two or more layers of carbon nanotubes (CNTs) are grown in-situ; and each layer is impregnated with a matrix before growing the next layer.

Another method of manufacturing a composite material is described in WO 2009/019510. In this case the CNTs are grown ex-situ and dipped into a liquid layer of matrix in a previously impregnated layer of CNTs.

A limiting factor for the usefulness of the apparatus and techniques described in the above documents is the natural volume of fraction of reinforcement material, approximately 2 vol %, and the difficulty of creating architectures where reinforcements in adjacent layers overlap each other with a sufficient aspect ratio.

A method of capillary forming CNTs is described in Diverse 3D Microarchitectures Made by Capillary Forming of Carbon Nanotubes; by De Volder, Michael; Tawfick, Sameh H.; Park, Sei Jin; Copic, Davor; Zhao, Zhouzhou; Lu, Wei; Hart, A. John; Advanced Materials; 2010; volume 22; pages 4384-4389.

### SUMMARY OF THE INVENTION

A first aspect of the invention provides a method of manufacturing a composite material, the method according to claim 1 comprising:
a. depositing a catalyst material over a deposition area, the catalyst material being patterned within the deposition area to form an array of catalyst regions which are spaced apart by gaps substantially free of catalyst material, wherein a proportion of the deposition area occupied by the catalyst regions is greater than a proportion of the deposition area which is substantially free of catalyst material;
b. growing a first array of bundles of filaments on the catalyst regions, wherein growth of the filaments is catalysed by the catalyst material, each filament has a base attached to the catalyst region and a free tip, each filament is spaced apart from adjacent filaments in the bundle by an inter-filament gap, each bundle is spaced apart from adjacent bundles in the array by an inter-bundle gap substantially free of filaments, and each bundle has a base attached to the catalyst region and a free tip;
c. drawing the free tips of the filaments together within each bundle, so that the inter-filament gaps become smaller at the tip of each bundle than at the base of each bundle where the filaments remain attached to the catalyst region;
d. repeating steps a. and b. (and optionally also step c.) to provide a second array of bundles of filaments;
e. positioning or growing at least part of the second array in the inter-bundle gaps of the first array; and
f. impregnating the inter-filament gaps and inter-bundle gaps of both arrays with a matrix material.

In WO 2008/029178 and WO 2009/019510 the proportion of the deposition area occupied by the catalyst regions is relatively low, and hence the overall density of CNTs is low. The method of the first aspect of the invention enables an improved composite material to be manufactured with a higher density of filaments than is possible using the methods described in WO 2008/029178 and WO 2009/019510.

Preferably the proportion of the deposition area occupied by the catalyst regions is greater than a proportion of the deposition area occupied by the gaps between the catalyst regions. Preferably each catalyst region has a solid shape with no internal voids which are substantially free of catalyst material. However if such internal voids are present then the proportion of the deposition area occupied by the catalyst regions is preferably greater than the proportion of the deposition area occupied by the gaps and the voids summed together.

Typically the matrix material forms a continuous structure which substantially completely fills the space in the composite material which is not occupied by the filaments, thereby fixing the filaments in space relative to each other.

Typically the matrix material is capable of transferring load from each array to adjacent arrays, from each bundle to adjacent bundles and from each filament to adjacent filaments.

Typically the matrix material is formed for a material which is less strong and less stiff than the filaments.

The composite material may be impregnated with matrix material in a single step. However more typically the matrix material is applied as a series of layers, each layer being applied at a different time. In this case the first array is impregnated with a first layer of matrix material in a first impregnation step, and the second array is impregnated with a second layer of matrix material in a second impregnation step.

Typically the matrix material is cured as a series of layers, each layer being cured at a different time. The benefit of such a layer-by-layer curing approach is that each cured matrix layer may have a different cross-sectional shape, size, or pattern, enabling a "net shape" part to be grown by additive fabrication. However, the invention also extends to processes in which all of the matrix material in the composite is cured at the same time. That is, each successive layer of matrix material remains uncured until the part is complete, and the part is then heated to cure the matrix throughout in a single curing step.

The matrix material may cured by exposure to electromagnetic radiation, such as a scanning laser beam or other radiation beam such as an electron beam. This enables the matrix to be cured selectively - that is with a desired shape, size or pattern which may vary layer-to-layer.

The bundles of the second array may be positioned in a separate step e. by dipping the free tips of the second array into a layer of liquid matrix material in the inter-bundle gaps of the first array, as described in WO 2009/019510. This enables the second array (and optionally also the first array) to be grown ex-situ, that is remotely from the liquid matrix material, and optionally on the same substrate as the first array. This allows the filaments to be grown at high temperatures, up to ∼1400°C, which is significantly higher than the temperatures required to cure certain types of liquid matrix material such as liquid epoxy resin. In this case the method typically further comprises: growing the first array on a substrate; transferring the first array onto a build platform with the tips adjacent the build platform and the bases remote from the build platform; and impregnating the inter-filament gaps and inter-bundle gaps of the first array with the layer of liquid matrix material after it has been transferred to the build platform. The composite material may have only two layers, or steps a. and b. (and optionally also step c.) can be repeated to provide a third array of bundles of filaments; impregnating the inter-filament gaps and inter-bundle gaps of the second array with a second layer of liquid matrix material; and dipping the free tips of the third array into the second layer of liquid matrix material in the inter-bundle gaps of the second array. Typically the first layer of liquid matrix material is cured before the second layer of liquid matrix material impregnates the inter-filament gaps and inter-bundle gaps of the second array, for instance by scanning a radiation beam across it.

Alternatively the inter-filament gaps and inter-bundle gaps of the first array may be impregnated with a matrix layer before growth of the second array; and at least part of the second array grown in the inter-bundle gaps of the first array by depositing a catalyst material on the matrix layer in the inter-bundle gaps of the first array and growing the second array of bundles of filaments on the catalyst regions in the inter-bundle gaps of the first array.

Optionally only the first array may be formed by drawing the free tips of the filaments together within each bundle. However more preferably the method further comprises drawing the free tips of the filaments of the second array together within each bundle, so that the inter-filament gaps become smaller at the tip of each bundle than at the base of each bundle where the filaments remain attached to the catalyst region.

The free tips of the filaments may be drawn together in step c. by an electrostatic forming method, or more preferably by a capillary forming method involving impregnating the bunches of filaments with a capillary forming liquid and evaporating the capillary forming liquid.

Preferably the number of catalyst regions in the first array is different to the number of catalyst regions in the second array. This enables a series of reinforcement layers to be grown with different shapes under the control of a three-dimensional computer model of a part so that a "net shape" part is grown by additive fabrication.

A further aspect of the invention provides a composite according to claim 12 material comprising:
a first array of bundles of filaments,
   wherein each bundle and each filament has a base, a stalk and a tip;
   wherein the bases of the first array of bundles are spaced apart from each other by inter-base gaps, the bases of the bundles occupy an area which is greater than the area occupied by the inter-base gaps, and each stalk is spaced apart from adjacent stalks in the first array by an inter-stalk gap; and wherein each filament is spaced apart from adjacent filaments in the bundle by an inter-filament gap which is smaller at the tip of the filament than at the base of the filament;
a second array of bundles of filaments,
   wherein at least part of the second array of bundles are positioned in the inter-stalk gaps between the stalks of the first array; and
a matrix material occupying the inter-filament gaps and inter-stalk gaps.

Typically the bases of the first array of bundles lie in a plane, and the bases of the first array of bundles overlap with the second array of bundles when viewed at a right angle to said plane.

The filaments may comprise single walled CNTs; multi-walled CNTs, carbon nanofibres; CNTs coated with a layer of amorphous carbon, or any other suitable filament material. Typically the filaments have an aspect ratio greater than 100, preferably greater than 1000, and most preferably greater than 10⁶.

Typically the matrix material forms a continuous structure which substantially completely fills the space in the composite material which is not occupied by the filaments, thereby fixing the filaments in space relative to each other.

Typically the matrix material is capable of transferring load from each array to adjacent arrays, from each bundle to adjacent bundles and from each filament to adjacent filaments.

Typically the matrix material is formed for a material which is less strong and less stiff than the filaments.

Possible applications for the composite material include flat lenses, or three-dimensional meta-materials with negative refractive index.

### BRIEF DESCRIPTION OF THE DRAWINGS

Embodiments of the invention will now be described with reference to the accompanying drawings, in which:
Figure 1 is a schematic view showing an ALM chamber and a CVD-CNT chamber;
Figure 2 shows the deposition of a first catalyst layer;
Figure 3 is a plan view of the catalyst layer;
Figure 4 is a side view of an array of bundles of CNTs;
Figure 5 is a schematic plan view of one of the bundles of CNTs;
Figure 6 shows a first stage of a capillary forming process;
Figure 7 shows the capillary-formed CNTs suspended above a layer of uncured matrix material;
Figure 8 shows the CNTs being dipped into the layer of uncured matrix material;
Figure 9 shows a second layer of CNTs suspended above the first layer;
Figure 10 shows the second layer of CNTs being dipped into a layer of uncured matrix material;
Figure 11 shows the composite with the second matrix layer cured;
Figure 12 shows a three-layer composite piece;
Figure 13 is a sectional view taken along a line A-A in Figure 12;
Figure 14 is an alternative sectional view taken along a line A-A in Figure 12;
Figure 15 shows a two-layer composite piece with 100% overlap;
Figure 16 shows a two-layer composite piece with less than 100% overlap;
Figure 17 shows a two-layer composite piece with only one capillary-formed layer;
Figure 18 is a schematic view showing a combined ALM and CVD-CNT chamber;
Figure 19 shows a first stage of an in-situ manufacturing process;
Figure 20 shows a second stage of the in-situ manufacturing process;
Figure 21 shows a third stage of the in-situ manufacturing process; and
Figure 22 shows a three-layer composite piece manufactured by the process of Figures 19-21.

### DETAILED DESCRIPTION OF EMBODIMENT(S)

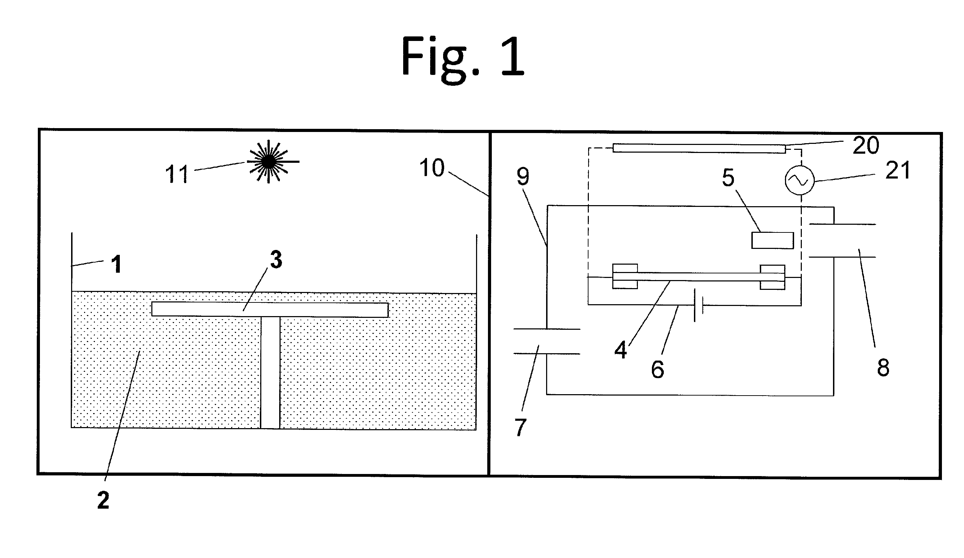

Figure 1 is a schematic diagram showing an additive layer manufacturing (ALM) chamber on the left hand side of the figure, and a chemical vapour deposition-CNT (CVD-CNT) growth chamber on the right hand side. These two chambers are separated by a door 10. The ALM chamber comprises a vat 1 containing an un-cured liquid photo curing resin 2. A build platform 3 is mounted in the vat 1 and can be moved up and down as required. The CVD-CNT chamber contains a silicon transfer body 4 which is connected to an electrical heating circuit 6. The chamber has a gas input 7, a gas output 8 and a door 9.

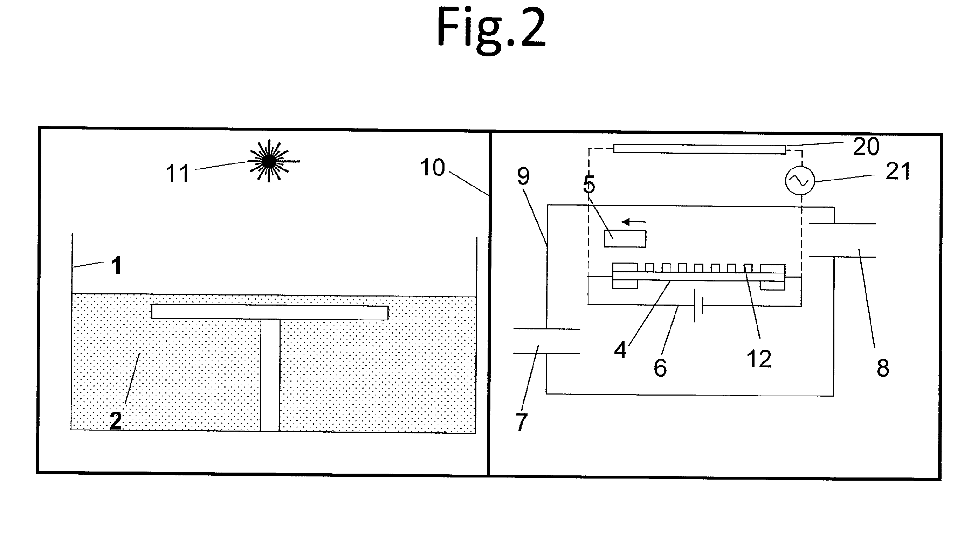

Referring to Figure 2, a catalyst deposition system 5 deposits catalyst material 12 onto the silicon transfer body 4 in a predefined shape, pattern and density. The system 5 may comprise a printing head which sprays an array of colloid drops onto the transfer body 4, and as the colloid evaporates, metal catalyst particles suspended in the colloid drops are deposited. The catalyst particles may be, for example a metal, preferably transition metals Fe, Ni or Co, or alloys thereof; and the colloid liquid may be, for example alcohol, water, oil, or a mixture thereof. Alternatively the system 5 may deposit catalyst by another process such as evaporation of a metal.

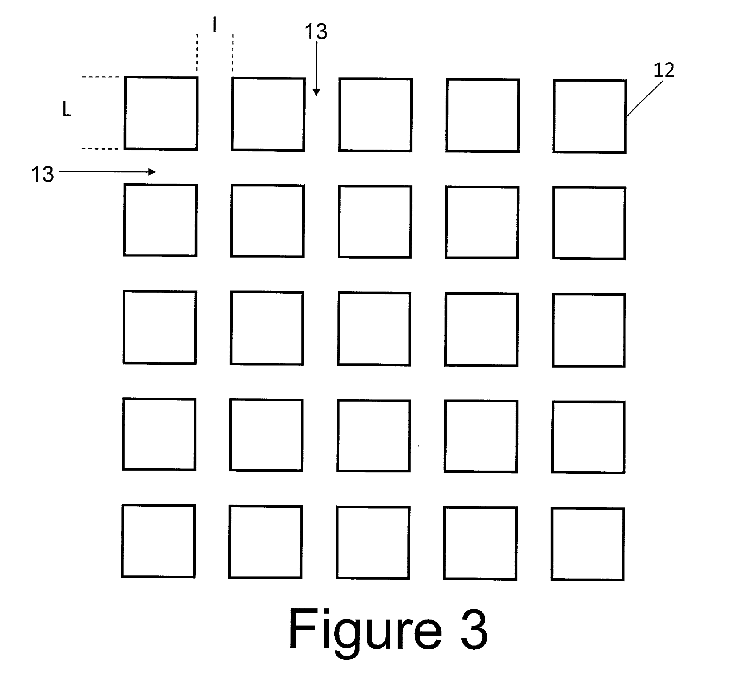

Figure 3 is a plan view of an array of catalyst regions 12 printed over a deposition area on the substrate 4. The catalyst material is patterned within the deposition area to form an array of square catalyst regions 12 which are spaced apart by gaps 13 substantially free of catalyst material.

The regions 12 have a diameter L and the gaps 13 have a width I. For the regions shown in Figure 3 the area A1 occupied by the regions 12 is 25L² and the area A2 occupied by the gaps 13 is 16I²+40LI. For clarity of illustration, the area A1 is only marginally greater than the area A2 in Figure 3. However, in practice the width I can be reduced relative to L to make A2 much less than A1 if desired.

After the catalyst has been deposited, and subsequent conditioning of the catalyst by a combination of heat and oxidation and reduction using oxygen and hydrogen gases, a layer of carbon nanotubes (CNTs) is grown on the catalyst regions 12 by a chemical vapour deposition process. Carbonaceous gas is introduced into the CVD-CNT chamber via the gas input 7 and the substrate 4 is heated locally by the electrical heating circuit 6. More specifically, the circuit 6 induces an electrical current in the transfer body 4 which heats it resistively. Growth of CNTs is enhanced by generating a plasma in the chamber using an electrode 20 powered by a power supply 21.

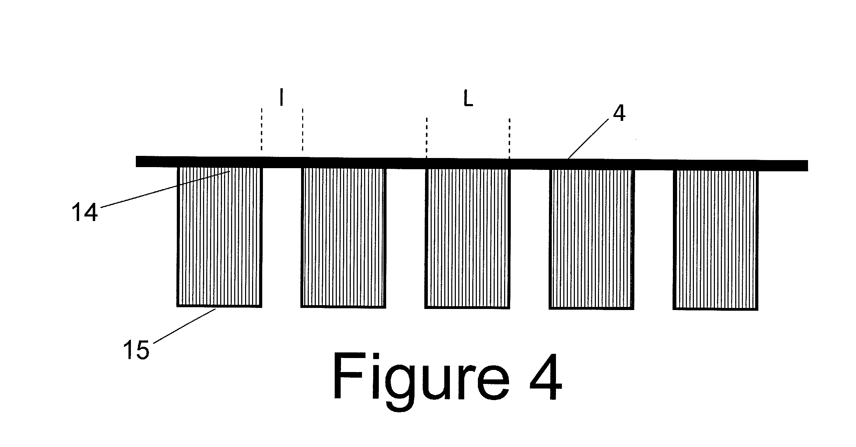

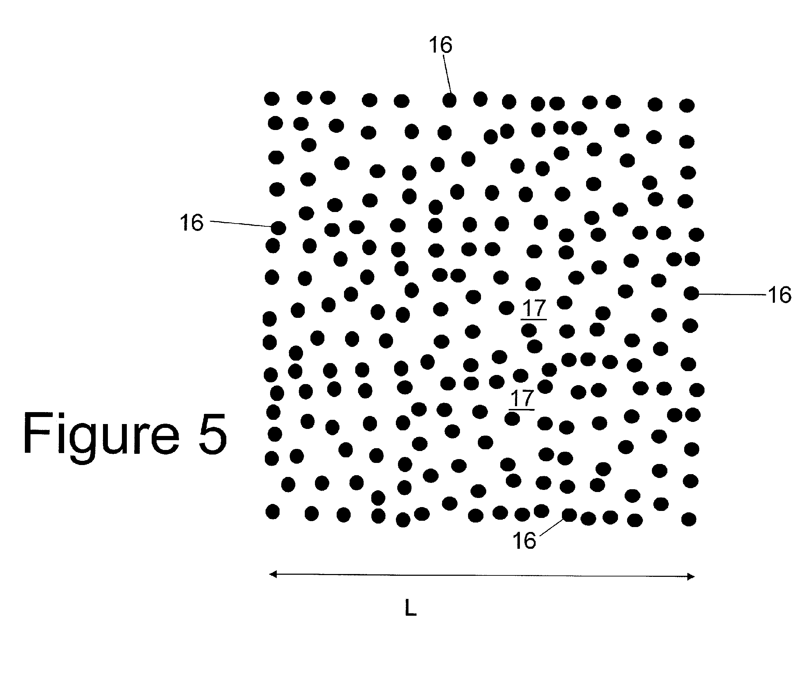

Figure 4 is a side view of an array of CNT bundles on the substrate 4. Each bundle has a base 14 attached to a catalyst region 12 on the substrate and a free tip 15. Each bundle comprises a plurality of CNTs, each CNT also having a base attached to the substrate and a free tip. Figure 5 is a schematic plan view of one of the bundles, showing individual CNTs. Note that Figure 5 is highly schematic and the diameter of the CNTs is not to scale relative to the diameter L of the bundle or the spacing between the CNTs. The CNTs 16 at the periphery of the bundle define an area occupied by that bundle (in this case L²). Each CNT is spaced apart from adjacent CNTs in the bundle by an inter-filament gap 17.

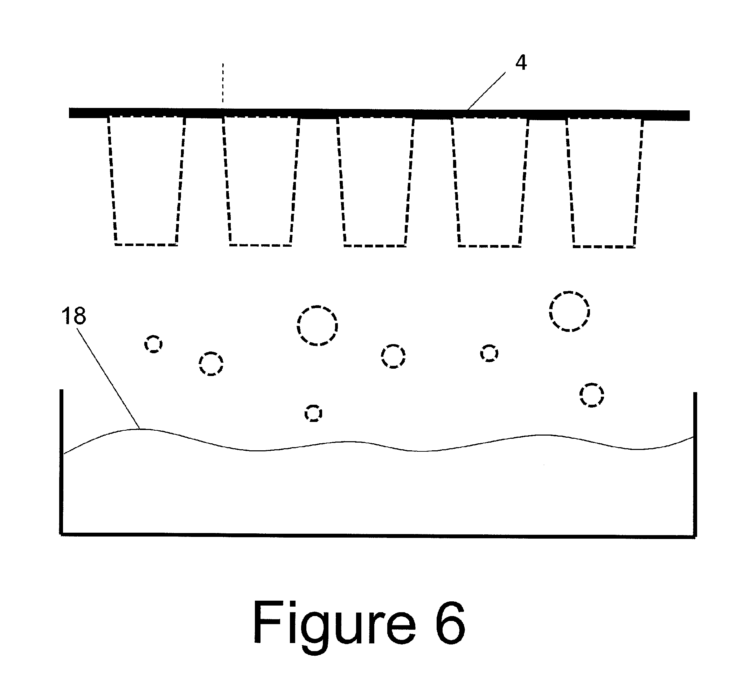

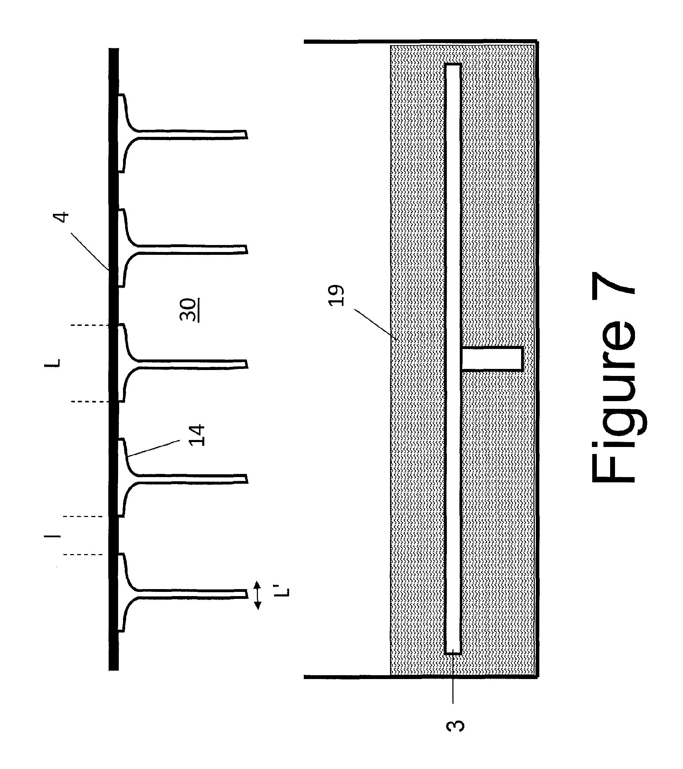

After the CNTs have been grown, they are capillary formed by the process shown in Figure 6. In a first step the CNTs are suspended over a bath of liquid solvent 18. The solvent 18 is heated so that it evaporates and condenses on the CNTs, wetting the CNTs and impregnating the inter-filament gaps 17. This draws the free tips of the CNTs together slightly within each bundle so the bundles distort slightly as shown in Figure 6. Next the capillary forming liquid solvent on the CNTs is evaporated so that the free tips of the filaments are drawn together to form the highly densified shapes shown in Figure 7. The inter-filament gaps at the tip of each bundle are now significantly smaller than at the base 14 of each bundle where the filaments remain attached to the catalyst region 12. The diameter L' of the tips of the CNT bundles is now slightly less than the width I of the gaps between the catalyst regions, and significantly less than the width L at the base of the bundle.

After the first layer of CNTs has been grown and densified, the doors 9,10 between the chambers are opened to allow the substrate 4 to be decoupled from the resistive heating circuit 6, rotated by 180 degrees, and moved into the ALM chamber.

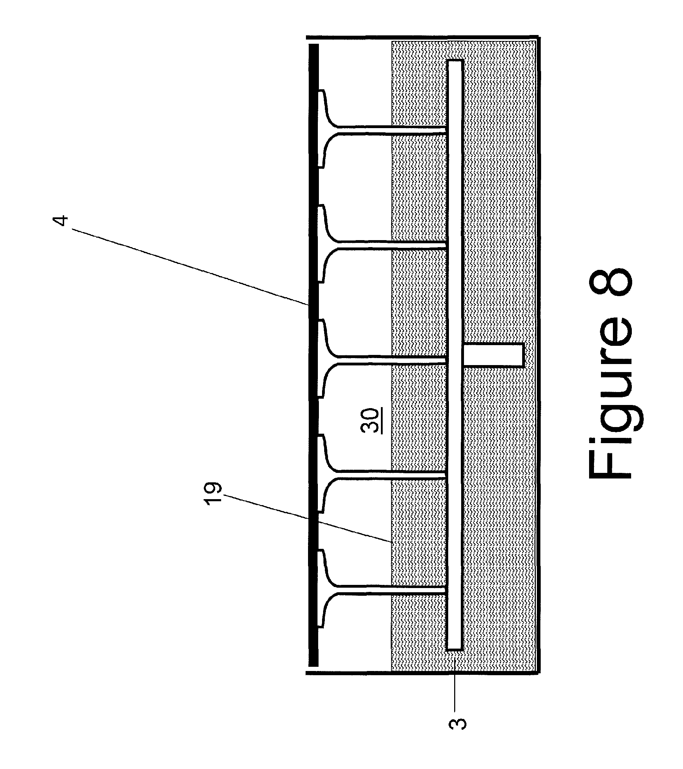

Referring to Figure 7, the substrate 4 is then lowered such that the tips of the CNTs penetrate into a thin base layer 19 of liquid polymer above the build platform 3. A strong surface interaction derives a capillary action effect, wicking the liquid polymer into the inter-filament gaps 17 between the CNTs and the inter-bundle gaps 30 between the bundles. The first layer of CNTs is penetrated only partially so that the bases of the fibres protrude from the surface of the polymer layer 19 as shown in Figure 8.

In the next step the substrate 4 is removed. The CNTs remain embedded in the polymer layer 19 due to the surface interactions. The substrate 4 is then returned to the CVD-CNT chamber and the doors 9, 10 are closed.

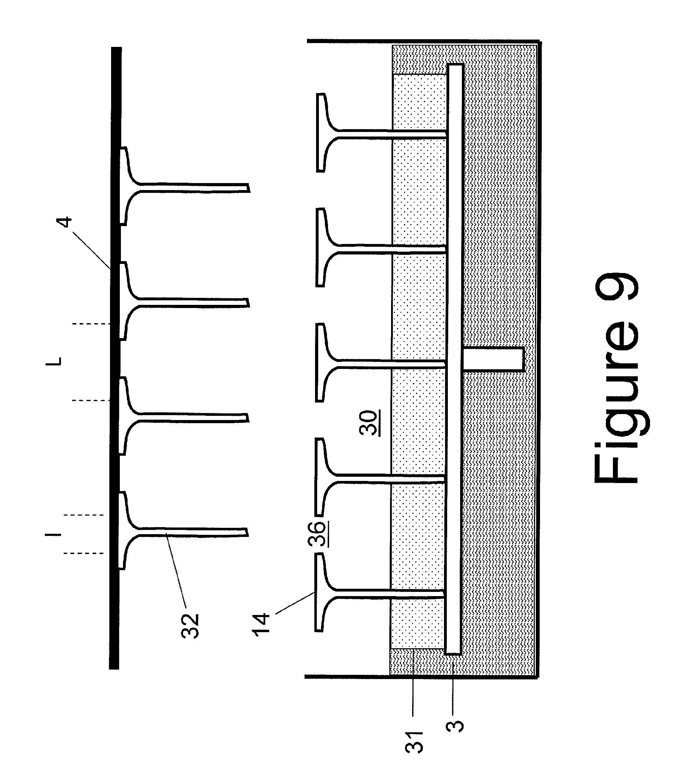

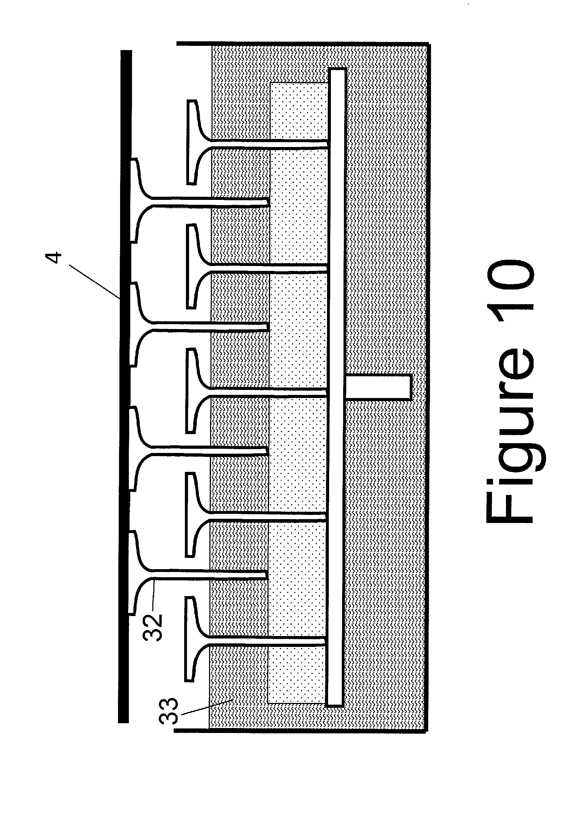

A laser 11 is then activated and scanned over the surface of the layer of CNTs to selectively cure areas of resin, resulting in a cured base layer 31 (Figure 9) comprising a cross-linked and hardened polymer matrix layer surrounding the CNT layer. The build platform 3 is then lowered into the bulk of the liquid resin 2, allowing a flow of liquid resin over the surface of the base layer, into the inter-bundle gaps 30 between the CNT protruding from the cured matrix layer 31 as shown in Figure 10.

The process is then repeated to provide a second array of CNTs on the substrate 4 with narrow stalks 32 which are dipped into a layer of liquid matrix material 33 in the inter-bundle gaps of the first array as shown in Figure 10.

The bases 14 of the first array of bundles are spaced apart from each other by inter-base gaps 36 (one of which is labelled in Figure 9) which are just wide enough to admit the stalks 32 of the second array. The bases 14 of the bundles occupy an area which is greater than the area occupied by the inter-base gaps 36 in the same plane (their areas being dictated by the pattern of catalyst regions from which the bundles have been grown).

In the next step the substrate 4 is removed and the CNTs 32 remain embedded in the polymer layer 33 due to the surface interactions. The substrate 4 is then returned to the CVD-CNT chamber and the doors 9, 10 are closed.

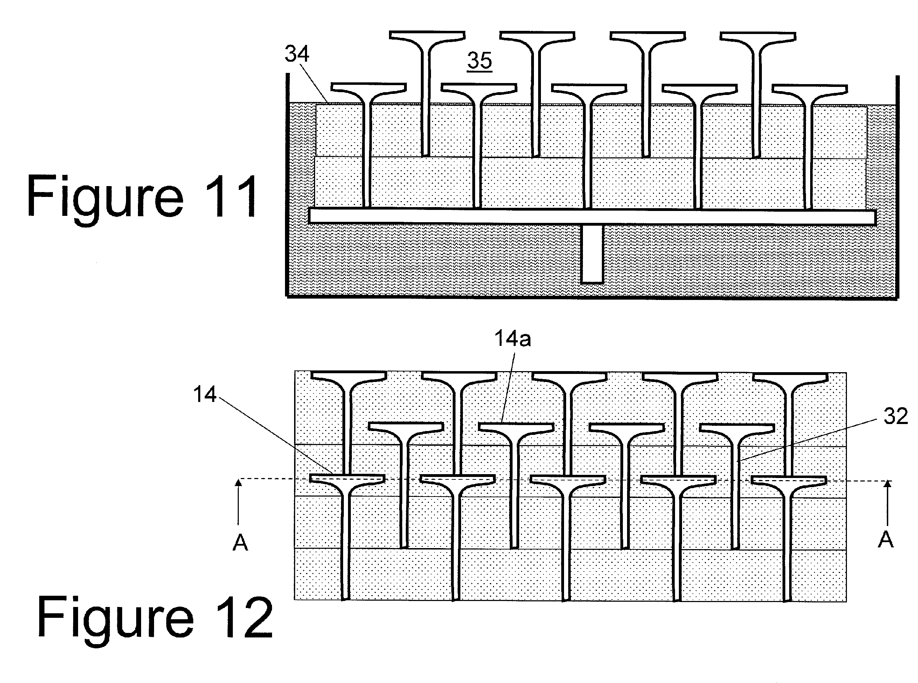

The laser 11 is then activated and scanned over the surface of the second layer of CNTs 32 to selectively cure areas of resin, resulting in a cured layer 34 (Figure 11) comprising a cross-linked and hardened polymer matrix layer surrounding the CNT layer. The build platform 3 is then lowered into the bulk of the liquid resin 2, allowing a flow of liquid resin over the surface of the second layer 34, into the inter-bundle gaps 35 between the CNTs protruding from the matrix layer 34.

The process can then be repeated any number of times. For example Figure 12 shows a three layer composite material in which the process has been repeated one more time only.

Figure 12 shows the first and third arrays of CNTs as 5X5 square arrays (with square outer shapes) and the second array of CNTs as a 4X4 square array (with a square outer shape). In general each subsequent array can be grown with the same outer shape or more typically a different outer shape to other arrays. Building up a series of reinforcement layers with different shapes under the control of a three-dimensional computer model of a part enables a "net shape" part to be grown by additive fabrication. Similarly each layer of matrix can be cured selectively with a different shape under the control of a three-dimensional computer model to match the shape of the array which it is impregnating.

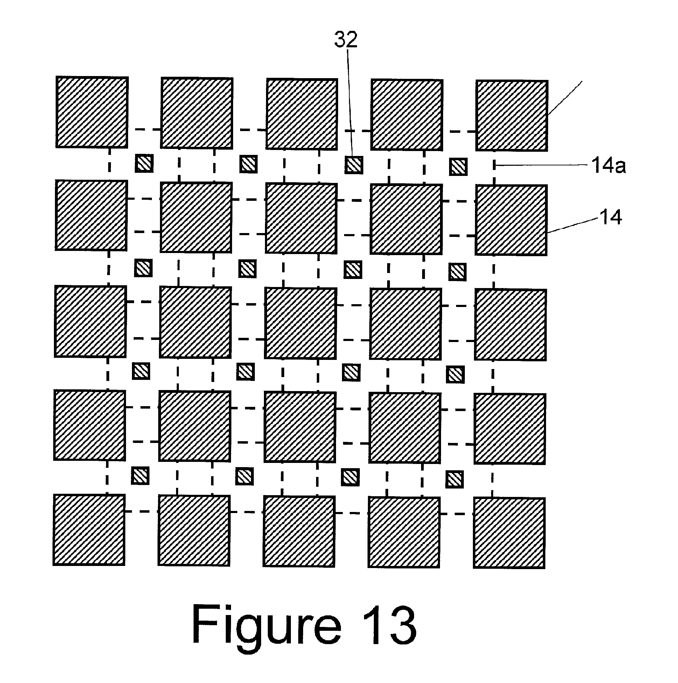

Figure 13 is a cross-sectional view taken along a line A-A in Figure 12. The bases 14 of the first array of bundles lie in the plane A-A of the cross-section. The bases 14a of the second array of bundles lie in a second plane which is parallel but not coplanar with the plane A-A. As can be seen in Figure 13, the bases 14 overlap with the bases 14a when viewed at a right angle to the plane A-A. Figure 13 also shows that the second array is offset diagonally from the first array so that the stalks 32 fit into the centre of each four bundle sub-array of the first array.

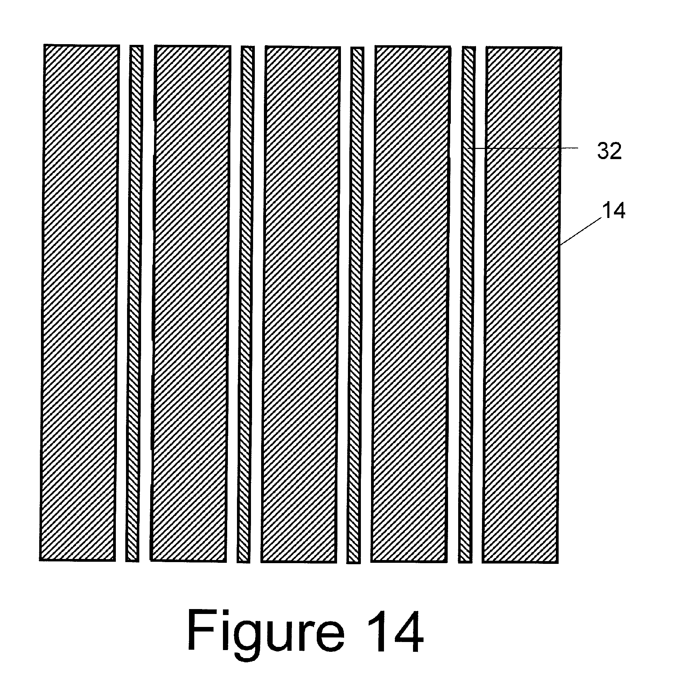

Figure 14 is a cross-sectional view taken along a line A-A in Figure 12 for an alternative striped pattern. In this case each bundle of CNTs is a stripe which extends across the full width of the deposition area, with the stalks 32 of the second array fitting in the slots between the bases 14 of the first array.

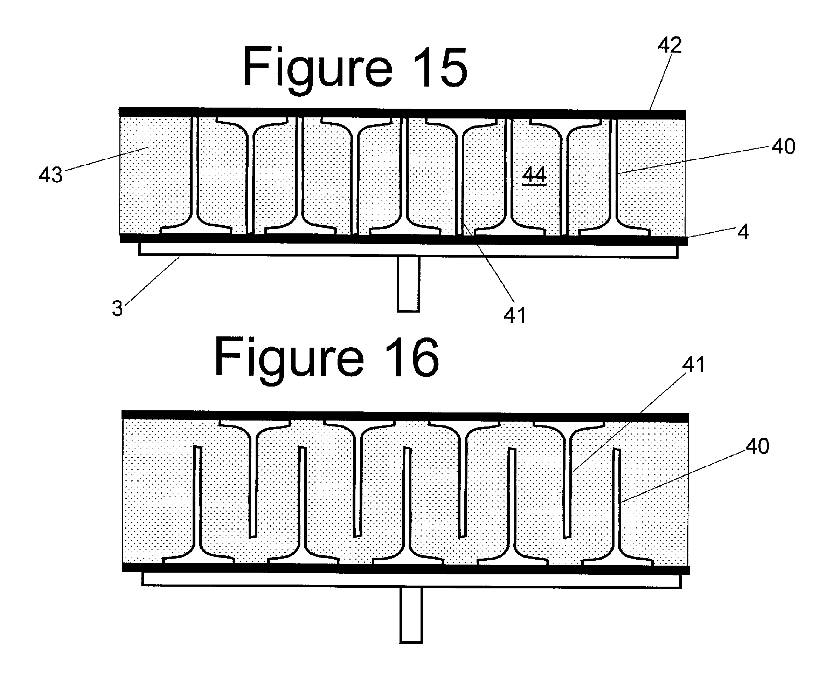

Figure 15 is a side view of a two-layer composite film comprising a first array of bundles of CNTs 40 which have been grown and densified on the substrate 4 by the process described above and placed on the build platform 3 with their tips pointing up. A second array of bundles of CNTs 41 have been grown and densified on a second substrate 42 and dipped into a liquid layer of matrix material 43 in the inter-bundle gaps between the bundles of the first array. The substrate 42 is then removed and the matrix material 43 cured. The stalks of the second array of bundles 41 are positioned in the inter-stalk gaps 44 between the stalks of the first array of bundles 40. The stalks are generally oppositely oriented.

The first and second arrays in Figure 15 overlap by 100%. Due to the 100% overlap between the layers the composite material of Figure 15 has a total thickness which is equal to the individual thickness of each filament layer. Figure 16 shows an alternative arrangement in which there is less than 100% overlap between the arrays 40,41. Due to the partial overlap between the layers the composite material of Figure 16 has a total thickness which is greater than the individual thickness of each filament layer.

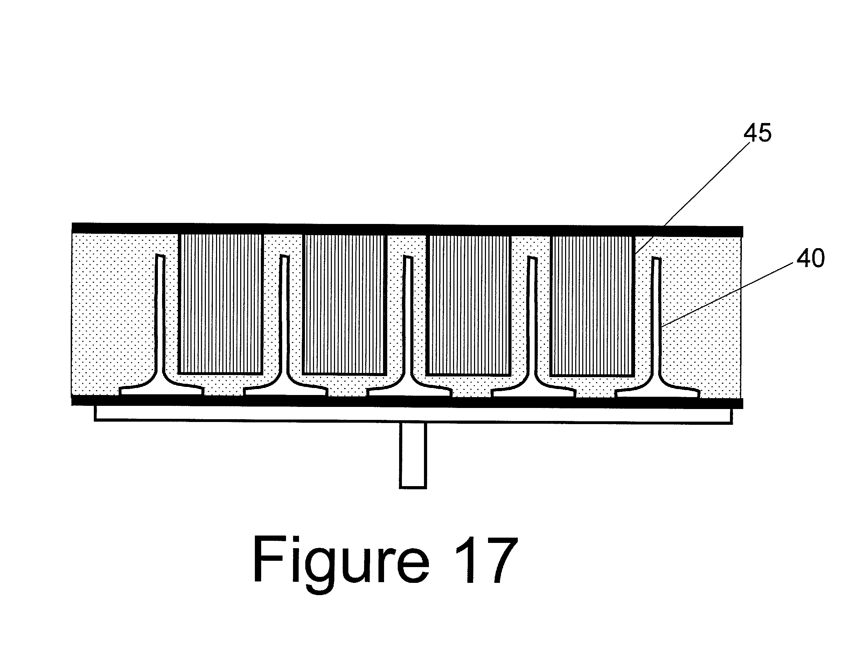

The first and second arrays 40,41 are both densified, and Figure 17 shows an alternative arrangement in which the second array 45 is not densified.

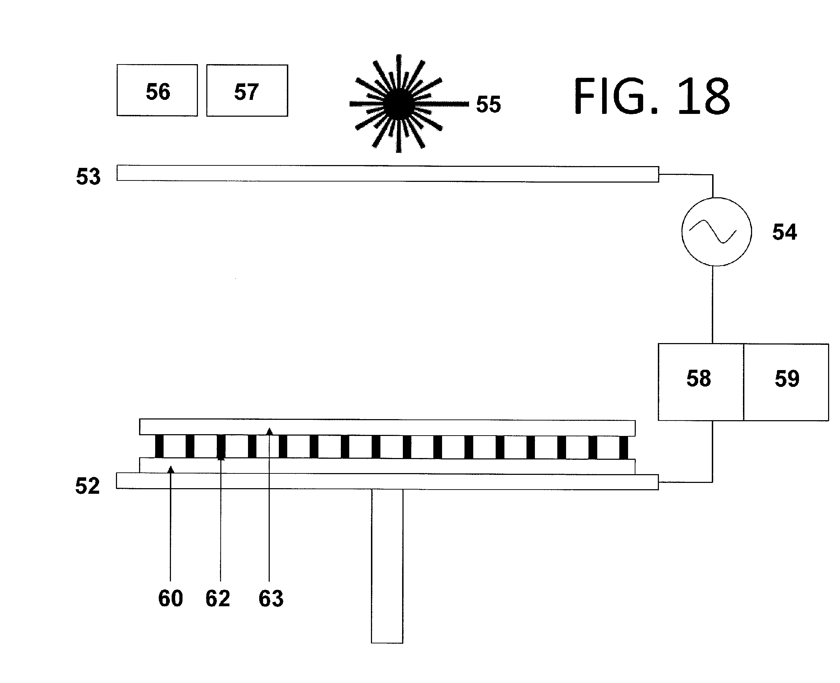

Figures 18-22 show an alternative system in which the CNTs are grown in-situ. The apparatus shown in Figure 18 is housed within a process chamber (not shown). A negative plasma source electrode 52 and a positive plasma source electrode 53 are connected by a power source 54. A laser 55 is positioned above the positive plasma source 53, and is associated with a raster scanning mechanism (not shown). A gas supply 56 can be turned on and off to supply a pre-heated process gas to the chamber, such as CH₄/H₂. A second gas supply 57 can be turned on and off to supply an inert gas such as N₂ to the process chamber. The inert gas is preheated to a temperature at or just below the melting point of the matrix material. The electrode 52 is also heated by a heating element (not shown) to a similar temperature.

A heated hopper 58 and a cooled ink-jet printing head 59 are mounted on a transport mechanism (not shown) which can move the hopper 58 and printing head 59 from left to right in Figure 18 (that is, from one end of the negative plasma source 52 to the other). A transport mechanism (not shown) is provided for driving the negative plasma source 52 up and down.

In a first process step, the hopper 58 is filled with a polymer powder such as polyetheretherketone (PEEK). The hopper 58 is moved across the negative plasma source 52, and a dispensing orifice (not shown) in the hopper 58 is opened to deposit a layer 60 of polymer powder. Thus the source 52 also acts as a bed or platform for the additive layer manufacturing process. The orifice is then closed. The inert gas prevents oxidation of the polymer. The laser 55 is turned on and the raster mechanism scans the beam across the layer 60 to consolidate the layer 60. The heating effect of the laser beam causes the polymer layer 60 to melt. A shutter (not shown) in the path of the laser beam is opened and closed selectively to modulate the beam as it is scanned over the layer 60. Thus the layer 60 is consolidated only in the areas required to form a desired shape. More specifically, the shutter is opened and closed in accordance with a computer-aided design (CAD) model which defines a series of slices through the desired three-dimensional shape.

In a second process step, the printing head 59 is moved across the layer 60 to deposit a patterned array of catalyst particles. The printing head 59 sprays an array of colloid drops onto the layer 60, and as the colloid evaporates in the high temperature inert gas environment, metal catalyst particles suspended in the colloid drops are deposited. The catalyst particles may be, for example a metal, preferably transition metals Fe, Ni or Co, or alloys thereof; and the colloid liquid may be, for example alcohol, water, oil, or a mixture thereof. A fluid-based cooling system (not shown) cools the printing head 59 and a reservoir (not shown) containing the printing fluid to prevent the colloid liquid from boiling before it is printed. The printing orifice of the printing head 59 (which emits the spray of droplets) is positioned sufficiently close to the layer 60 to ensure that the colloid liquid does not evaporate deleteriously in flight, before hitting the layer 60.

Optionally the catalyst material may be conditioned as part of the second process step, through a process of spherulisation and/or oxidation and/or reduction, depending on the catalyst type. This conditioning is performed by the combination of heating and supply of an oxidising and/or reducing gas, depending on the catalyst type

In a third process step, carbonaceous feed stock is introduced from the gas supply 56 and the power source 54 is turned on to generate a plasma between the electrodes 52, 53. This causes the in-situ growth of a layer of nanofibres, aligned with the direction of the electromagnetic field between the electrodes 52,53. The growth mechanism is as described by Baker (Baker, R.T.K., Barber, M.A., Harris, P.S., Feates, F.S. & Waire, R.J. J J Catal **26** (1972). It is generally accepted that the carbonaceous gas is dissociated on the surface of the metal catalyst particle and carbon is adsorbed onto the surface where it is then transported by diffusion to the precipitating face forming a carbon filament with the catalyst particle at the tip. Discussion is ongoing with regards to whether this diffusion is through the bulk of the catalyst or along its surface(s) and to whether the diffusion is driven by a carbon concentration or thermal gradient. Thus when the growth process is complete, a "forest" of nanofibres bundles 62 is produced, each nanofibre carrying a catalyst particle at its tip.

The catalyst particles and plasma enable the nanofibre growth to occur at a relatively low temperature, lower than the melting point of the matrix.

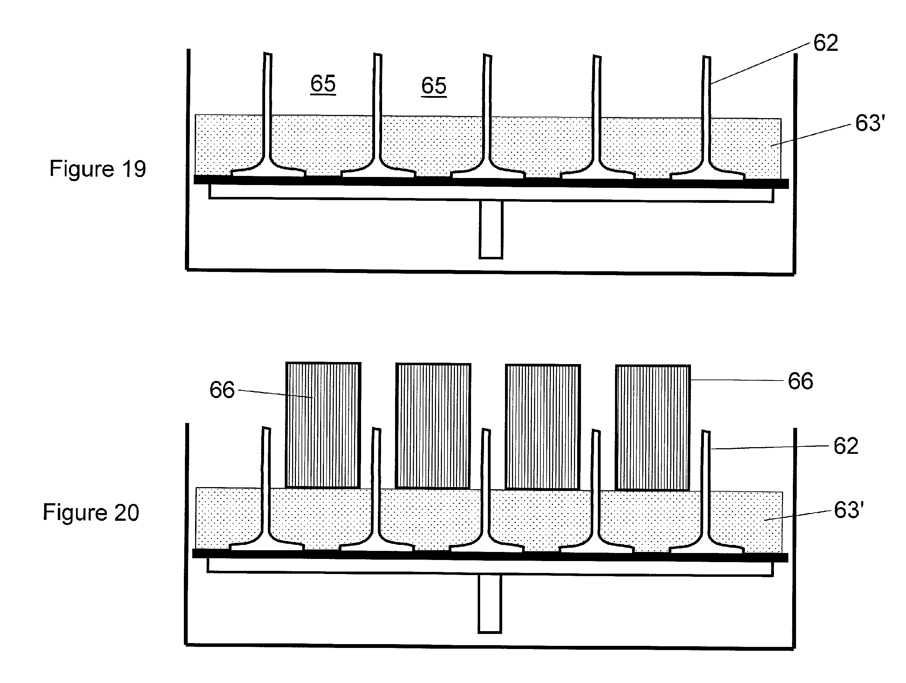

Once nanofibres of a suitable length have been grown, the plasma power source 54 and gas supply 56 are turned off, the inert gas is purged, and in a fourth process step the CNT bundles 62 are densified by the capillary forming method described above, reducing the diameter of the CNT bundles as shown in Figure 19.

Next the platform 52 is lowered and the hopper 58 is moved along the layer of nanofibres to deposit a further layer 63 of polymer powder.

In a fifth process step, the laser 55 is turned on and the raster mechanism scans the beam across the layer 63 to form a consolidated layer 63' shown in Figure 19. During the raster scan, the shutter is opened and closed as required to form the consolidated layer 63' in a desired shape.

The thickness of the unconsolidated polymer layer 63 is selected so that the layer of CNTs is only partially impregnated with the matrix through a lower part of its thickness, leaving an upper part of the layer of CNTs exposed as shown in Figure 19. By way of example, the thickness of the unconsolidated layer 63 shown in Figure 18 may be in the range of 0.2-0.5 mm, and the thickness of the consolidated layer 63' shown in Figure 19 may be in the range of 0.1-0.25 mm. Although the ratio between the length of the CNT bundles 62 and the thickness of the consolidated layer 63' is of the order of 2:1 in Figure 19, this is for illustrative purposes only and in practice a much smaller degree of overlap (for instance a ratio of 1.05:1) will be required to give significant interlayer reinforcement.

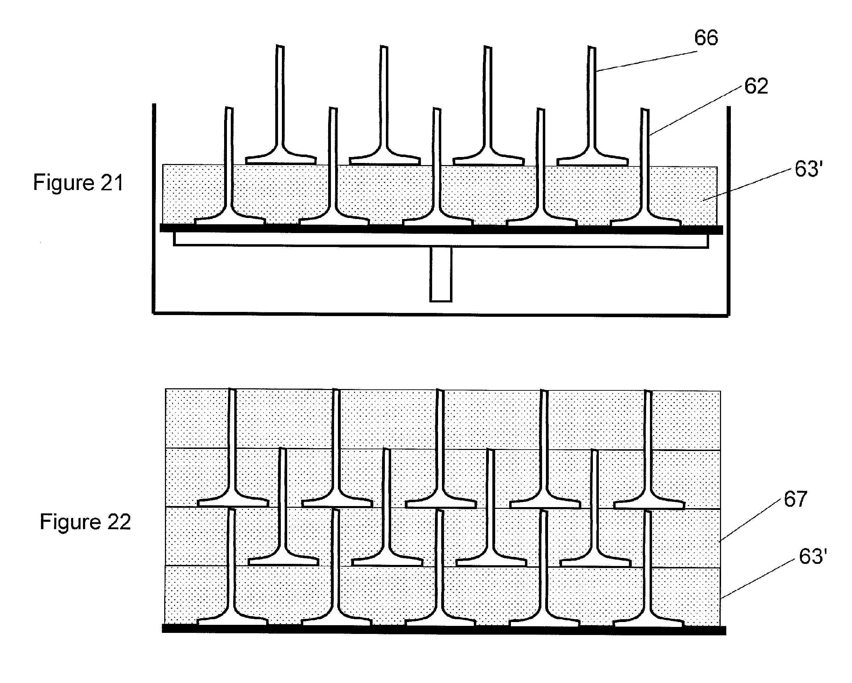

Next a patterned layer of catalyst is deposited on the cured matrix layer 63' in the gaps 65 between the bundles 62, and a second array of CNT bundles 66 is grown on the catalyst regions as shown in Figure 20. Next the CNT bundles 66 are densified by the capillary forming method described above, reducing the diameter of the CNT bundles as shown in Figure 21. The inter-filament gaps and inter-bundle gaps of both arrays are then impregnated with a second layer of matrix material 67 as shown in Figure 22, and the process can be repeated indefinitely to produce a bulk composite material.

## Claims

1. A method of manufacturing a composite material, the method comprising:
a. depositing a catalyst material (12) over a deposition area, the catalyst material being patterned within the deposition area to form an array of catalyst regions which are spaced apart by gaps (13) substantially free of catalyst material, wherein a proportion of the deposition area occupied by the catalyst regions is greater than a proportion of the deposition area which is substantially free of catalyst material;
b. growing a first array of bundles of filaments on the catalyst regions, wherein growth of the filaments is catalysed by the catalyst material (12), each filament has a base attached to the catalyst region and a free tip, each filament is spaced apart from adjacent filaments in the bundle by an inter-filament gap (17), each bundle is spaced apart from adjacent bundles in the array by an inter-bundle gap (30) substantially free of filaments, and each bundle has a base (14) attached to the catalyst region and a free tip (15);
c. drawing the free tips of the filaments together within each bundle, so that the inter-filament gaps become smaller at the tip of each bundle than at the base of each bundle where the filaments remain attached to the catalyst region;
d. repeating steps a. and b. to provide a second array (32) of bundles of filaments;
e. positioning or growing at least part of the second array in the inter-bundle gaps (30) of the first array; and
f. impregnating the inter-filament gaps and inter-bundle gaps of both arrays with a matrix material (33).

2. The method of claim 1 wherein step e. comprises dipping the free tips of the second array into a layer of liquid matrix material in the inter-bundle gaps (30) of the first array.

3. The method of claim 2 further comprising: growing the first array on a substrate (4); transferring the first array onto a build platform (3) with the tips adjacent the build platform and the bases remote from the build platform; and impregnating the inter-filament gaps and inter-bundle gaps of the first array with the layer of liquid matrix material after it has been transferred to the build platform.

4. The method of claim 2 or 3 further comprising repeating steps a. and b. to provide a third array of bundles of filaments; impregnating the inter-filament gaps and inter-bundle gaps of the second array with a second layer of liquid matrix material; and dipping the free tips of the third array into the second layer of liquid matrix material in the inter-bundle gaps of the second array.

5. The method of claim 4 wherein the first layer of liquid matrix material is cured before the second layer of liquid matrix material impregnates the inter-filament gaps and inter-bundle gaps of the second array.

6. The method of any of claims 2 to 5 further comprising curing the liquid matrix material by scanning a radiation beam (55) across it.

7. The method of claim 1 wherein step f. comprises impregnating the inter-filament gaps and inter-bundle gaps of the first array with a matrix layer before growth of the second array; and wherein at least part of the second array is grown in the inter-bundle gaps of the first array by depositing a catalyst material on the matrix layer in the inter-bundle gaps of the first array and growing the second array of bundles of filaments on the catalyst regions in the inter-bundle gaps of the first array.

8. The method of any preceding claim further comprising drawing the free tips of the filaments of the second array together within each bundle, so that the inter-filament gaps become smaller at the tip of each bundle than at the base of each bundle where the filaments remain attached to the catalyst region.

9. The method of any preceding claim wherein the free tips of the filaments are drawn together within each bundle by impregnating the bunches of filaments with a capillary forming liquid (18) and evaporating the capillary forming liquid.

10. The method of claim 1 wherein the stalks of the first array are generally oppositely oriented to the stalks of the second array.

11. The method of any preceding claim wherein the number of catalyst regions in the first array is different to the number of catalyst regions in the second array.

12. A composite material comprising:
a. a first array (14) of bundles of filaments,
wherein each bundle and each filament has a base, a stalk and a tip;
wherein the bases of the first array of bundles are spaced apart from each other by inter-base gaps, the bases of the bundles occupy an area which is greater than the area occupied by the inter-base gaps, and each stalk is spaced apart from adjacent stalks in the first array by an inter-stalk gap; and
wherein each filament is spaced apart from adjacent filaments in the bundle by an inter-filament gap which is smaller at the tip of the filament than at the base of the filament;
b. a second array of bundles of filaments (32),
wherein at least part of the second array of bundles are positioned in the inter-stalk gaps between the stalks of the first array; and
c. a matrix material (34) occupying the inter-filament gaps and inter-stalk gaps.

13. The material of claim 12 wherein
each bundle and each filament in the second array has a base, a stalk and a tip; the bases of the second array of bundles are spaced apart from each other by inter-base gaps, the bases of the second array of bundles occupy an area which is greater than the area occupied by the inter-base gaps, and each stalk is spaced apart from adjacent stalks in the second array by an inter-stalk gap; and
each filament in the second array is spaced apart from adjacent filaments in the bundle by an inter-filament gap which is smaller at the tip of the filament than at the base of the filament.

14. The material of claim 12 or 13 wherein the bases of the first array of bundles lie in a plane, and the bases of the first array of bundles overlap with the second array of bundles when viewed at a right angle to said plane.

15. The material of claim 12, 13 or 14 wherein the stalks of the first array are generally oppositely oriented to the stalks of the second array.

## Patentansprüche

1. Verfahren zur Herstellung eines Verbundwerkstoffs, wobei das Verfahren folgende Verfahrensschritte umfasst:
a. Ablagern eines Katalyse-Materials (12) in einem Ablagerungsbereich, wobei das Katalyse-Material innerhalb des Ablagerungsbereichs gemustert ist, um eine Reihe von Katalyse-Bereichen zu bilden, die durch Zwischenräume (13) voneinander getrennt sind, die im Wesentlichen frei von Katalyse-Material sind, wobei ein Teil des Ablagerungsbereichs, der von den Katalyse-Bereichen belegt ist, größer ist als ein Teil des Ablagerungsbereichs, der im Wesentlichen frei von Katalyse-Material ist;
b. Vergrößern einer ersten Reihe von Filamentbündeln auf den Katalyse-Bereichen, wobei die Größe der Filamente vom Katalyse-Material (12) katalysiert wird, wobei jedes Filament eine Basis, die am Katalyse-Bereich befestigt ist, und ein freies Ende aufweist, wobei jedes Filament von den benachbarten Filamenten im Bündel durch einen Inter-Filament-Zwischenraum (17) mit Abstand angeordnet ist, wobei jedes Bündel von den benachbarten Bündeln in der Reihe durch einen Inter-Bündel-Zwischenraum (30) mit Abstand angeordnet ist, der im Wesentlichen frei von Filamenten ist, und wobei jedes Bündel eine Basis (14), die am Katalyse-Bereich befestigt ist, und ein freies Ende aufweist;
c. Zusammenziehen der freien Filamentenden innerhalb eines jeden Bündels, so dass die Inter-Filament-Zwischenräume an der Spitze eines jeden Bündels kleiner werden als an der Basis eines jeden Bündels, wo die Filamente am Katalyse-Bereich befestigt bleiben;
d. Wiederholen der Schritte a. und b. zur Herstellung einer zweiten Reihe (32) von Filamentbündeln;
e. Positionieren oder Vergrößern wenigstens eines Teils der zweiten Reihe in den Inter-Bündel-Zwischenräumen (30) der ersten Reihe; und
f. Imprägnieren der Inter-Filament-Zwischenräume und der Inter-Bündel-Zwischenräume beider Reihen mit einem Matrixmaterial (33).

2. Verfahren nach Anspruch 1, wobei der Verfahrensschritt e. das Eintauchen der freien Enden der zweiten Reihe in eine Schicht von flüssigem Matrixmaterial in den Inter-Bündel-Zwischenräumen (30) der ersten Reihe umfasst.

3. Verfahren nach Anspruch 2, weiterhin enthaltend: Vergrößerung der ersten Reihe auf einem Substrat (4); Übertragen der ersten Reihe auf eine Bauplattform (3), wobei die Spitzen an die Bauplattform angrenzen und wobei die Basis von der Bauplattform entfernt sind; und Imprägnieren der Inter-Filament-Zwischenräume und der Inter-Bündel-Zwischenräume der ersten Reihe mit der Schicht von flüssigem Matrixmaterial nachdem diese zur Bauplattform übertragen wurde.

4. Verfahren nach Anspruch 2 oder 3, weiterhin enthaltend das Wiederholen der Verfahrensschritte a. und b. zur Erzeugung einer dritten Reihe von Filamentbündeln; das Imprägnieren der Inter-Filament-Zwischenräume und der Inter-Bündel-Zwischenräume der zweiten Reihe mit einer zweiten Schicht von flüssigem Matrixmaterial; und das Eintauchen der freien Enden der dritten Reihe in die zweite Schicht von flüssigem Matrixmaterial in den Inter-Bündel-Zwischenräumen der zweiten Reihe.

5. Verfahren nach Anspruch 4, wobei die erste Schicht von flüssigem Matrixmaterial aushärtet bevor die zweite Schicht von flüssigem Matrixmaterial die Inter-Filament-Zwischenräume und die Inter-Bündel-Zwischenräume der zweiten Reihe imprägniert.

6. Verfahren nach einem der Ansprüche 2 bis 5, weiterhin umfassend das Aushärten des flüssigen Matrixmaterials durch Scannen mit einem Strahlungsbündels (55).

7. Verfahren nach Anspruch 1, wobei der Verfahrensschritt f. das Imprägnieren der Inter-Filament-Zwischenräume und der Inter-Bündel-Zwischenräume der ersten Reihe mit einer Matrixschicht vor dem Vergrößern der zweiten Reihe umfasst; und wobei wenigstens ein Teil der zweiten Reihe in den Inter-Bündel-Zwischenräumen der ersten Reihe durch Ablagern eines Katalyse-Materials auf der Matrixschicht in den Inter-Bündel-Zwischenräumen der ersten Reihe vergrößert wird, und durch Vergrößern der zweiten Reihe von Filamentbündeln auf den Katalyse-Bereichen in den Inter-Bündel-Zwischenräumen der ersten Reihe.

8. Verfahren nach einem der vorangegangenen Ansprüche, weiterhin umfassend das Zusammenziehen der freien Ende der Filamente der ersten Reihe innerhalb eines jeden Bündels, so dass die Inter-Filament-Zwischenräume an der Spitze eines jeden Bündels schmaler werden als an der Basis eines jeden Bündels, wo die Filamente am Katalyse-Bereich befestigt bleiben.

9. Verfahren nach einem der vorangegangenen Ansprüche, wobei die freien Enden der Filamente innerhalb eines jeden Bündels zusammengezogen werden, und zwar durch Imprägnieren der Filamentbündel mit einer Kapillare bildenden Flüssigkeit (18) und durch Verdampfen der Kapillare bildenden Flüssigkeit.

10. Verfahren nach Anspruch 1, wobei die Stiele der ersten Reihe in der Regel gegenüber den Stielen der zweiten Reihe entgegengesetzt ausgerichtet sind.

11. Verfahren nach einem der vorangegangenen Ansprüche, wobei sich die Anzahl der Katalyse-Bereiche in der ersten Reihe von der Anzahl der Katalyse-Bereiche in der zweiten Reihe unterscheidet.

12. Verbundwerkstoff, enthaltend:
a. eine erste Reihe (14) von Filamentbündeln,
wobei jedes Bündel und jedes Filament eine Basis, einen Stiel und eine Spitze aufweist;
wobei die Basen der ersten Reihe von Bündeln durch Inter-Basis-Zwischenräume mit Abstand zueinander angeordnet sind, wobei die Basen der Bündel einen Bereich belegen, der größer ist als der Bereich, der von den Inter-Basis-Zwischenräumen belegt wird, und wobei jeder Stiel durch einen Inter-Stiel-Zwischenraum mit Abstand zu benachbarten Stielen in der ersten Reihe angeordnet ist; und
wobei jedes Filament durch einen Inter-Filament-Zwischenraum mit Abstand zu benachbarten Filamenten im Bündel angeordnet ist, der an der Spitze des Filaments kleiner ist als an der Basis des Filaments;
b. eine zweite Reihe von Filament-Bündeln (32),
wobei wenigstens ein Teil der zweiten Reihe von Bündeln in den Inter-Stiel-Zwischenräumen zwischen den Stielen der ersten Reihe angeordnet ist; und
c. ein Matrixmaterial (34), das die Inter-Filament-Zwischenräume und die Inter-Stiel-Zwischenräume belegt.

13. Material nach Anspruch 12, wobei
jedes Bündel und jedes Filament in der zweiten Reihe eine Basis, einen Stiel und eine Spitze aufweist;
die Basen des zweiten Reihe von Bündeln voneinander durch Inter-Basis-Zwischenräume beabstandet sind, die Basen der zweiten Reihe von Bündeln einen Bereich belegen, der größer ist als der Bereich, der von den Inter-Basis-Zwischenräumen belegt wird, und jeder Stiel gegenüber benachbarten Stielen in der zweiten Reihe durch einen Inter-Stiel-Zwischenraum beabstandet ist; und
jedes Filament in der zweiten Reihe gegenüber benachbarten Filamenten im Bündel durch einen Inter-Filament-Zwischenraum beabstandet ist, der an der Spitze des Filaments kleiner ist als an der Basis des Filaments.

14. Material nach Anspruch 12 oder 13, wobei die Basen der ersten Reihe von Bündeln in einer Ebene liegen und die Basis der ersten Reihe von Bündeln mit der zweiten Reihe von Bündeln überlappen, wenn man sie im rechten Winkel zu dieser Eben betrachtet.

15. Material nach Anspruch 12, 13 oder 14, wobei die Stiele der ersten Reihe in der Regel gegenüber den Stielen der zweiten Reihe gegensätzlich ausgerichtet sind.

## Revendications

1. Procédé pour fabriquer une matière composite, le procédé comprenant les étapes consistant à :
a. déposer un matériau catalyseur (12) sur une zone de dépôt, le matériau catalyseur étant modelé à l'intérieur de la zone de dépôt afin de former un réseau de régions de catalyseur qui sont espacées par des espaces (13) sensiblement dépourvus de matériau catalyseur, dans lequel une proportion de la zone de dépôt occupée par les régions de catalyseur est supérieure à une proportion de la zone de dépôt qui est sensiblement dépourvue de matériau catalyseur ;
b. faire croître un premier réseau de faisceaux de filaments sur les régions de catalyseur, dans lequel la croissance des filaments est catalysée par le matériau catalyseur (12), chaque filament a une base fixée sur la région de catalyseur et une pointe libre, chaque filament est espacé des filaments adjacents dans le faisceau par un espace entre les filaments (17), chaque faisceau est espacé des faisceaux adjacents dans la réseau par un espace entre les faisceaux (30) sensiblement dépourvu de filaments, et chaque faisceau a une base (14) fixée à la région de catalyseur et une pointe libre (15) ;
c. rassembler les pointes libres des filaments à l'intérieur de chaque faisceau, de sorte que les espaces entre les filaments sont plus petits au niveau de la pointe de chaque faisceau qu'à la base de chaque faisceau où les filaments restent fixés à la région de catalyseur ;
d. répéter les étapes a. et b. pour fournir un deuxième réseau (32) de faisceaux de filaments ;
e. positionner ou faire croître au moins une partie du deuxième réseau dans les espaces entre les faisceaux (30) du premier réseau ; et
f. imprégner les espaces entre les filaments et les espaces entre les faisceaux des deux réseaux avec un matériau de matrice (33).

2. Procédé selon la revendication 1, dans lequel l'étape e. comprend l'étape consistant à plonger les pointes libres du deuxième réseau dans une couche de matériau de matrice liquide dans les espaces entre les faisceaux (30) du premier réseau.

3. Procédé selon la revendication 2, comprenant en outre les étapes consistant à faire croître le premier réseau sur un substrat (4) ; transférer le premier réseau sur une plateforme de construction (3) avec les pointes adjacentes à la plateforme de construction et les bases à distance de la plateforme de construction et imprégner les espaces entre les filaments et les espaces entre les faisceaux du premier réseau avec la couche de matériau de matrice liquide après qu'elle a été transférée vers la plateforme de construction.

4. Procédé selon la revendication 2 ou 3, comprenant en outre les étapes consistant à répéter les étapes a. et b. pour fournir un troisième réseau de faisceaux de filaments ; imprégner les espaces entre les filaments et les espaces entre les faisceaux du deuxième réseau avec une seconde couche de matériau de matrice liquide ; et plonger les pointes libres du troisième réseau dans la seconde couche de matériau de matrice liquide dans les espaces entre les faisceaux du deuxième réseau.

5. Procédé selon la revendication 4, dans lequel la première couche de matériau de matrice liquide est cuite avant que la seconde couche de matériau de matrice liquide n'imprègne les espaces entre les filaments et les espaces entre les faisceaux de deuxième réseau.

6. Procédé selon l'une quelconque des revendications 2 à 5, comprenant en outre l'étape consistant à faire cuire le matériau de matrice liquide en balayant un faisceau de rayonnement (55) sur ce dernier.

7. Procédé selon la revendication 1, dans lequel l'étape f. comprend l'étape consistant à imprégner les espaces entre les filaments et les espaces entre les faisceaux du premier réseau avec une couche de matrice ayant la croissance du deuxième réseau ; et dans lequel au moins une partie du deuxième réseau croît dans les espaces entre les faisceaux du premier réseau en déposant un matériau catalyseur sur la couche de matrice dans les espaces entre les faisceaux du premier réseau et en faisant croître le deuxième réseau de faisceaux de filaments sur les régions de catalyseur dans les espaces entre les faisceaux du premier réseau.

8. Procédé selon l'une quelconque des revendications précédentes, comprenant en outre l'étape consistant à rassembler les pointes libres des filaments du deuxième réseau à l'intérieur de chaque faisceau, de sorte que les espaces entre les filaments deviennent plus petits à la pointe de chaque faisceau qu'à la base de chaque faisceau où les filaments restent fixés à la région de catalyseur.

9. Procédé selon l'une quelconque des revendications précédentes, dans lequel les pointes libres des filaments sont rassemblées à l'intérieur de chaque faisceau en imprégnant les grappes de filaments avec un liquide de formation de capillaire (18) et en faisant évaporer le liquide de formation de capillaire.

10. Procédé selon la revendication 1, dans lequel les tiges du premier réseau sont orientées de manière généralement opposée aux tiges du deuxième réseau.

11. Procédé selon l'une quelconque des revendications précédentes, dans lequel le nombre de régions de catalyseur dans le premier réseau est différent du nombre de régions de catalyseur dans le deuxième réseau.

12. Matière composite, comprenant :
a. un premier réseau (14) de faisceaux de filaments, dans laquelle chaque faisceau et chaque filament a une base, une tige et une pointe ;
dans laquelle les bases du premier réseau de faisceaux sont espacées les unes des autres par des espaces entre les bases, les bases des faisceaux occupent une zone qui est supérieure à la zone occupée par les espaces entre les bases, et chaque tige est espacée des tiges adjacentes dans le premier réseau par un espace entre les tiges ; et
dans laquelle chaque filament est espacé des filaments adjacents dans le faisceau par un espace entre les filaments qui est plus petit au niveau de la pointe du filament qu'au niveau de la base du filament ;
b. un deuxième réseau de faisceaux de filaments (32), dans laquelle au moins une partie du deuxième réseau de faisceaux est positionnée dans les espaces entre les tiges, entre les tiges du premier réseau ; et
c. un matériau de matrice (34) occupant les espaces entre les filaments et les espaces entre les tiges.

13. Matière selon la revendication 12, dans laquelle
chaque faisceau et chaque filament dans le deuxième réseau a une base, une tige et une pointe ;
les bases du deuxième réseau de faisceaux sont espacées les unes des autres par des espaces entre les bases, les bases du deuxième réseau de faisceaux occupent une zone qui est supérieure à la zone occupée par les espaces entre les bases, et chaque tige est espacée des tiges adjacentes dans le deuxième réseau par un espace entre les tiges ; et
chaque filament dans le deuxième réseau est espacé des filaments adjacents dans le faisceau par un espace entre les filaments qui est plus petit au niveau de la pointe du filament qu'au niveau de la base du filament.

14. Matière selon la revendication 12 ou 13, dans laquelle les bases du premier réseau de faisceaux se trouvent dans un plan, et les bases du premier réseau de faisceaux recouvrent le deuxième réseau de faisceaux lorsqu'elles sont observées en angle droit par rapport audit plan.

15. Matière selon la revendication 12, 13 ou 14, dans laquelle les tiges du premier réseau sont orientées de manière généralement opposée aux tiges du deuxième réseau.
